# EUROPEAN PATENT SPECIFICATION

(11) **EP 2 897 336 B1**
(45) Date of publication and mention of the grant of the patent: **02.08.2017**
(21) Application number: 13836997.0
(22) Date of filing: 06.09.2013
(51) Int. Cl.: H04L 29/06

(54) **METHOD, DEVICE AND SYSTEM FOR NETWORK POLICY CONTROL**
VERFAHREN, VORRICHTUNG UND SYSTEM FÜR NETZWERKRICHTLINIENKONTROLLE
PROCÉDÉ, DISPOSITIF ET SYSTÈME DE COMMANDE DE POLITIQUE DE RÉSEAU

(30) Priority: 17.09.2012 CN 201210345448
(43) Date of publication of application: 22.07.2015
(73) Proprietor: ZTE Corporation, Shenzhen, Guangdong 518057 (CN)
(72) Inventor: HUANG, Sunliang, Shenzhen Guangdong 518057 (CN); CHEN, Jianye, Shenzhen Guangdong 518057 (CN); FAN, Chengfa, Shenzhen Guangdong 518057 (CN); LI, Hongbiao, Shenzhen Guangdong 518057 (CN)
(74) Representative: Zimmermann, Tankred Klaus
(86) International application number: PCT/CN2013/083074
(87) International publication number: WO 2014/040517

(56) References cited:
- EP-A1- 1 988 680
- EP-A2- 2 461 528
- WO-A1-2011/101021
- CN-A- 1 486 019
- CN-A- 102 158 369
- CN-A- 102 523 291
- CN-A- 102 882 712

## Description

### Technical Field

The present invention relates to the field of communications, and more particularly to a method, device and system for network policy control.

### Background

With the development of network technology, the bandwidth that a network operator can provide to a user becomes higher and higher, but the revenue does not growing correspondingly, on the contrary, the value of Average Revenue Per User (ARPU) of the broadband user is always in a state of decline. The operator has been exploring differentiated operation and providing differentiated services for the user, so as to increase the service revenue; but it has little effect.

At the same time, the application and content provider is not capable of guaranteeing a service policy of the end users due to the limit of bandwidth and quality of network, which results in the limit in the development of services. With the multimedia of Internet services, there are more and more video and voice services, and a lot of services of the Internet Content Provider (ICP)/Internet Service Provider (ISP) can not be guaranteed, which seriously influences the user experience.

To sum up, aiming at the problem in related technologies about how to provide differentiated services for the user to improve the service experience of the user, no effective solution has been presented yet.

WO 2011/101021 A1 and EP 1 988 680 A1 provide related solutions, however, the above problem has not been solved.

### Summary

Aiming at the problem in related technologies about how to provide differentiated services for the user to improve the service experience of the user, the present invention provides a method, according to claim 1 a device according to claim 8 and systems for network policy control, according to claims 14-15 so as to at least solve the above problem.

According to an embodiment of the present invention, a method for network policy control is provided. In the method, an application system determines that a user requires a high-priority network service policy; and the application system requests the high-priority network service policy from a policy control system.

In an example embodiment, the application system determines that the user requires the high-priority network service policy in the following manner: the application system determines a network service policy required by the user; the application system judges whether the current network service policy of the user is lower than the required network service policy; if the current network service policy of the user is lower than the required network service policy, the application system determines that the user requires the high-priority network service policy.

In an example embodiment, the application system determines the network service policy required by the user in the following manner: the application system determines the network service policy required by the user according to a service selected by the user and/or attribute information of the user.

In an example embodiment, the application system requests the high-priority network service policy from the policy control system in the following manner: the application system directly sends to the policy control system a request for requesting the high-priority network service policy; or, the application system sends to the policy control system a request for requesting the high-priority network service policy through a network service control device.

In an example embodiment, the method further includes that: the application system maintains a service state machine of the user, wherein the service state machine is configured to record a service state of the user.

In an example embodiment, after the application system requests the high-priority network service policy from the policy control system, the method further includes that: the application system updates the service state of the user according to an execution result of the request.

In an example embodiment, the application system updates the service state of the user according to the execution result of the request in the following manner: in the case that the request is executed successfully, the application system updates the service state of the user to be a high-priority service state; in the case that the request is executed unsuccessfully, the application system keeps the service state before the user requests the high-priority network service policy.

In an example embodiment, the service state includes: an on-state, an off-state, a common-priority service state and a high-priority service state.

In an example embodiment, the method further includes that: in the case that the service selected by the user is completed or an exception of a connection state of the user occurs, the application system sends to the policy control system a request for revoking the high-priority network service policy.

According to another embodiment of the present invention, a device for network policy control located in the application system is provided. The device for network policy control includes: a determining component, which is configured to determine that a user requires a high-priority network service policy; and a requesting component, which is configured to request the high-priority network service policy from a policy control system.

In an example embodiment, the determining component includes: a first determining unit, which is configured to determine a network service policy required by the user; a judging unit, which is configured to judge whether a current network service policy of the user is lower than the required network service policy; and a second determining unit, which is configured to, in the case that a judgement result of the judging unit is that the current network service policy of the user is lower than the required network service policy, determine that the user requires the high-priority network service policy.

In an example embodiment, the requesting component includes: a first sending unit, which is configured to directly send to the policy control system a request for requesting the high-priority network service policy; or a second sending unit, which is configured to send to the policy control system a request for requesting the high-priority network service policy through a network service control device.

In an example embodiment, the device further includes: a maintaining component, which is configured to maintain a service state machine of the user, wherein the service state machine is configured to record a service state of the user.

In an example embodiment, the device further includes: an updating component, which is configured to update the service state of the user according to an execution result of the request.

In an example embodiment, the updating component includes: a first updating unit, which is configured to, in the case that the request is executed successfully, update the service state of the user to be a high-priority service state; and a second updating unit, which is configured to, in the case that the request is executed unsuccessfully, keep the service state before the user requests the high-priority network service policy.

In an example embodiment, the device further includes: a revoking component, which is configured to, in the case that the service selected by the user is completed or an exception of a connection state of the user occurs, send to the policy control system a request for revoking the high-priority network service policy.

According to another embodiment of the present invention, an application system is provided. The system includes the device for network policy control provided by any embodiment of the present invention.

According to another embodiment of the present invention, a system for network policy control is provided. The system includes: an application system and a policy control system. The application system is configured to determine that a user requires a high-priority network service policy, and request the high-priority network service policy from the policy control system. The policy control system is configured to configure the high-priority network service policy for the user in responsive to the request of the application system for the high-priority network service policy.

In an example embodiment, the system further includes: a network service control device, which is configured to receive from the application system a request for requesting the high-priority network service policy, and request the high-priority network service policy from the policy control system.

In an example embodiment, the policy control system is configured to send the high-priority network service policy to a network service control device accessed by the user; and the network service control device is further configured to receive the high-priority network service policy, and configure the high-priority network service policy for the user.

Through the embodiments of the present invention, an application system determines that a user requires a high-priority network service policy, and requests the high-priority network service policy from a policy control system, so that the policy control system can configure the high-priority network service policy for the user on basis of the request of the application system. By virtue of this solution, the problem about how to provide differentiated services for the user to improve the service experience of the user is solved, a linkage between the application system and a network is implemented, thus the network quality assurance is implemented for the user on the network, and the service experience is improved for the user.

### Brief Description of the Drawings

The accompanying drawings described here are used for providing a deeper understanding of the present invention, and constitute a part of the application; schematic embodiments of the present invention and description thereof are used for illustrating the present invention and not intended to form improper limit to the present invention. In the accompanying drawings:
Fig. 1 is a diagram of a system for network policy control according to an embodiment of the present invention;
Fig. 2 is a diagram of a system for network policy control according to an example embodiment of the present invention;
Fig. 3 is a diagram of a service state machine according to an embodiment of the present invention;
Fig. 4 is a structure diagram of a device for network policy control according to an embodiment of the present invention;
Fig. 5 is a structure diagram of the determining component according to an example embodiment of the present invention;
Fig. 6 is a structure diagram of the requesting component according to an example embodiment of the present invention;
Fig. 7 is the structure diagram 1 of a device for network policy control according to an example embodiment of the present invention;
Fig. 8 is a structure diagram of the updating component according to an example embodiment of the present invention;
Fig. 9 is the structure diagram 2 of the device for network policy control according to an example embodiment of the present invention;
Fig. 10 is flowchart of a method for network policy control according to an embodiment of the present invention;
Fig. 11 is a flowchart of a method for network policy control according to mode 1 of the embodiment of the present invention; and
Fig. 12 is a flowchart of a method for network policy control according to mode 2 of the embodiment of the present invention.

### Detailed Description of the Embodiments

The present invention is described below with reference to the accompanying drawings and embodiments in detail. Note that, the embodiments and features in the embodiments in the application can be combined with each other.

Aiming at the problem in related technologies about how to provide differentiated services for the user to improve the service experience of the user, the inventor finds in the course of presenting the solution of the embodiments of the present invention that the root cause is the present network and application are in a state of division, the telecom operator can not sense content, and the ICP/ISP can not sense and control the network. Such state of division can not provide quality assurance to the Internet services, which influences the user experience. Thus, the service experience can be improved for the user by implementing effective sense and linkage between the network and the application system, and then implementing the network quality assurance aiming at the specific user on the network.

According to an embodiment of the present invention, a system for network policy control is provided for implementing a linkage between the network and the application system, and implementing the network quality assurance for the user on the network.

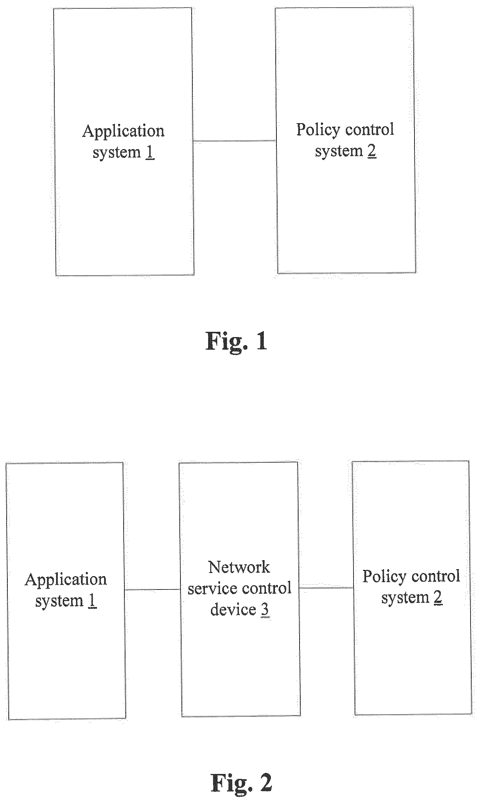

Fig. 1 is a diagram of a system for network policy control according to the embodiment of the present invention. As shown in Fig. 1, the system mainly includes: an application system 1 and a policy control system 2. The application system 1 is configured to determine that a user requires a high-priority network service policy, and request the high-priority network service policy from the policy control system 2; the policy control system 2 is configured to configure the high-priority network service policy for the user in responsive to the request of the application system 1 for the high-priority network service policy.

Through the embodiment of the present invention, the application system 1 determines that a user requires a high-priority network service policy, and requests the high-priority network service policy from the policy control system 2; the policy control system 2 configure the high-priority network service policy for the user in responsive to the request of the application system 1 for the high-priority network service policy. In this way, a linkage between the application system and a communication network is implemented, the network quality assurance is implemented for the user on the network, and the service experience is improved for the user.

In an implementation mode of the embodiment of the present invention, the application system 1 may be configured to determine that a user requires a high-priority network service policy in the following way: the application system 1 determines a network service policy required by the user, and judges whether the current network service policy of the user is lower than the required network service policy; if the current network service policy of the user is lower than the required network service policy, determines that the user requires the high-priority network service policy. In an example embodiment, the application system 1 is configured to determine the network service policy required by the user according to a service selected by the user and/or attribute information of the user.

In an implementation mode of the embodiment of the present invention, when requesting the high-priority network service policy from the policy control system 2, the application system 1 may directly send to the policy control system 2 a request for requesting the high-priority network service policy. To implement this mode, in a practical application, for implementing intercommunication between the application system 1 and the policy control system 2, a communication interface may be added between the application system 1 and the policy control system 2. For example, Simple Object Access Protocol (SOAP), Diameter, Common Open Policy Service (COPS) and private protocol interfaces may be adopted.

In another implementation mode of the embodiment of the present invention, when requesting the high-priority network service policy from the policy control system 2, the application system 1 may request the high-priority network service policy from the policy control system 2 through a network service control device. To implement this mode, in a practical application, for implementing intercommunication between the application system 1 and the network service control device, a communication interface may be added between the application system 1 and the network service control device. For example, Diameter/SOAP/COPS and private protocol interfaces may be adopted.

Fig. 2 is a diagram of a system for network policy control according to an example embodiment of the present invention. As shown in Fig.2, the system may further include: a network service control device 3, which is configured to receive from the application system 1 a request for requesting the high-priority network service policy, and request the high-priority network service policy from the policy control system 2.

In an implementation mode of the embodiment of the present invention, the policy control system 2 may be configured to send the high-priority network service policy to a network service control device 3 accessed by the user; the network service control device 3 is further configured to receive the high-priority network service policy, and configure the high-priority network service policy for the user. In an example embodiment, the policy control system 2 may find a corresponding user according to a source IP address and a port number of the user, so as to check an online state and a policy state of the user, and send the high-priority network service policy to the network service control device 3.

In a practical application, the network service control device 3 is configured to, in the case that a network quality limit is set on the network service control device 3, configure the high-priority network service policy on the network service control device 3. The network service control device 3 is further configured to, in the case that a network service policy limit is set on an access network, indicate the access network to configure the high-priority network service policy for the user. In an example embodiment, the network service control device 3 may negotiate, through an Access Node Control Protocol (ANCP), with the access network device to increase access bandwidth of the user.

In an implementation mode of the embodiment of the present invention, the network service control device 3 may be further configured to, after implementation of the high-priority network service policy, feed an execution result of the network service policy back to the policy control system. The policy control system 2 may be further configured to receive the execution result fed back by the network service control device 3, and feed the received execution result back to the application system 1. The application system 1 is also configured to update the service state of the user according to the execution result of the request. In an example embodiment, the application system 1 may be configured to update the service state of the user in the following way: in the case that the request is executed successfully, updating the service state of the user to be a high-priority service state; in the case that the request is executed unsuccessfully, keeping the service state before the user requests the high-priority network service policy.

In an example embodiment, the application system 1 may be further configured to, in the case that the service selected by the user is completed or an exception of a connection state of the user occurs, send to the policy control system 2 a request for revoking the high-priority network service policy.

In a practical application, the application system 1 may be configured to maintain a service state machine of the user, wherein the service state machine is configured to record a service state of the user and maintain state information of the user. The service state may include a connection state, a service priority state, and so on.

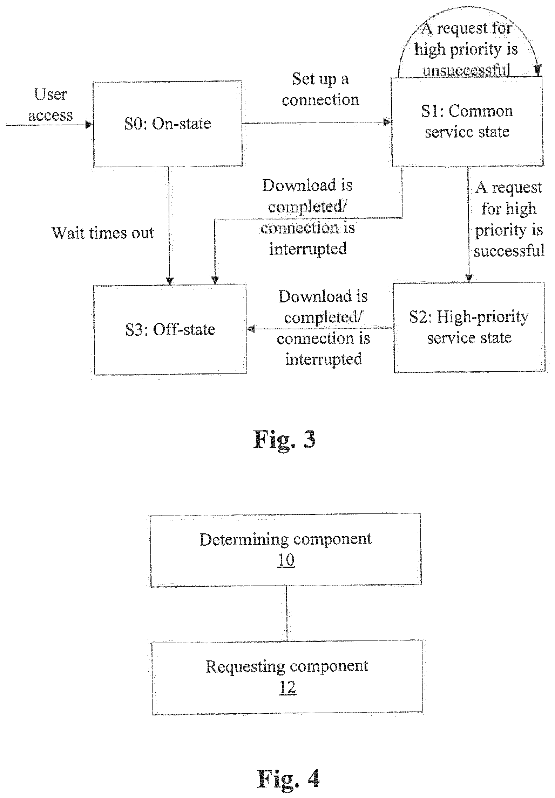

Fig. 3 is a diagram of a service state machine according to an embodiment of the present invention. As shown in Fig. 3, when a user selects a service in the application system 1, the application system 1 sets up a service state machine for the user according to the policy of the application system 1, and the user enters S0 (on-state); the user is in the S0 state, and attempts to establish a service connection; after the connection is established successfully, the user enters S1 (common service state); if the connection is established unsuccessfully, the user attempts corresponding wait and reconnection mechanism; if the reconnection is unsuccessful and exceeds corresponding limit, the user enters S3 (off-state), and releases corresponding resource.

After the user enters S1, the application system 1 is triggered to request the high-priority network service policy from the policy control system 2 or the network service control device 3. After the policy is executed successfully, the user enters S2 (high-priority service state); if the policy is executed unsuccessfully, the user keeps in S1. When the user completes download in S1, it is needed to break a download connection, at this point, the user is in S1 and directly enters S3. When the user is in S1, if the user connection is interrupted abnormally during download, the user directly enters S3 (off-state).

When the user completes download in S2, it is needed to break a download connection, and the application system 1 is triggered to request the policy control system 2 or the network service control device 3 to revoke the high-priority network service policy of the user. After the policy is revoked, the user enters S3 and releases corresponding resource. If the user connection is interrupted abnormally during download, the application system 1 is also triggered to request the policy control system 2 or the network service control device 3 to revoke the high-priority network service policy of the user. After the policy is revoked, the user enters S3 and releases corresponding resource.

In the embodiment of the present invention, a device for network policy control may be configured in the application system 1 to implement functions of the above embodiments of the present invention. An example application system 1 of the embodiment of the present invention is described below.

Fig. 4 is a structure diagram of a device for network policy control according to the embodiment of the present invention. As shown in Fig. 4, the device is located in an application system, and mainly includes: a determining component 10 and a requesting component 12. The determining component 10 is configured to determine that a user requires a high-priority network service policy; the requesting component 12 is coupled with the determining component 10 and configured to request the high-priority network service policy from a policy control system.

Through the embodiment of the present invention, the determining component 10 determines that a user requires a high-priority network service policy, and the requesting component 12 requests the high-priority network service policy from a policy control system, so that the policy control system can configure the high-priority network service policy for the user on basis of the request of the application system. In this way, the problem about how to provide differentiated services for the user to improve the service experience of the user is solved, a linkage between the application system and a network is implemented, thus the network quality assurance is implemented for the user on the network, and the service experience is improved for the user.

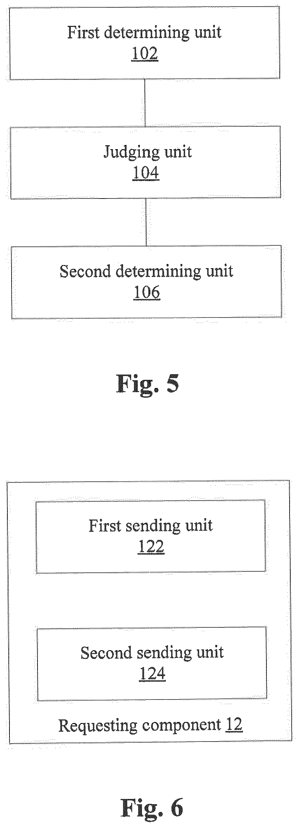

Fig. 5 is a structure diagram of the determining component according to an example embodiment of the present invention. As shown in Fig. 5, the determining component 10 may include: a first determining unit 102, which is configured to determine the network service policy required by the user; a judging unit 104, which is coupled with the first determining unit 102 and configured to judge whether the current network service policy of the user is lower than the required network service policy; and a second determining unit 106, which is coupled with the judging unit 104 and configured to, in the case that a judgement result of the judging unit 104 is that the current network service policy of the user is lower than the required network service policy, determine that the user requires the high-priority network service policy.

In an example embodiment, the first determining unit 102 may determine the network service policy required by the user according to a service selected by the user and/or attribute information of the user. For example, if the attribute information of the user indicates that the user is a high-level user, it is determined to provide the high-priority network service policy for the user, for example, bandwidth greater than that provided for the common user. For example, if the user selects a video service, greater download bandwidth may be provided for the user, so as to ensure the user to watch video without interruption.

Fig. 6 is a structure diagram of the requesting component according to an example embodiment of the present invention. As shown in Fig. 6, the requesting component 12 may include: a first sending unit 122, which is configured to directly send to the policy control system a request for requesting the high-priority network service policy; or, a second sending unit 124, which is configured to send to the policy control system a request for requesting the high-priority network service policy through a network service control device.

In an example implementation mode of the embodiment of the present invention, the device may further include: a maintaining component, which is configured to maintain a service state machine of the user, wherein the service state machine is configured to record a service state of the user. In a practical application, the service state may include: an on-state, an off-state, a common-priority service state, a high-priority service state, and so on. Multiple service state priorities may be set according to the actual need, and network service policies at different levels are provided aiming at different users and/or services.

In the embodiment of the present invention, when a connection is established between the user and the application system, the service state of the user may be recorded as on-state. After a connection is established between the user and the application system, service is provided for the user according to the common priority. When the requesting component 10 determines that the user requires the high-priority network service policy, the requesting component 12 requests the high-priority network service policy; if it is successful, the service state of the user may be recorded as the high-priority service state.

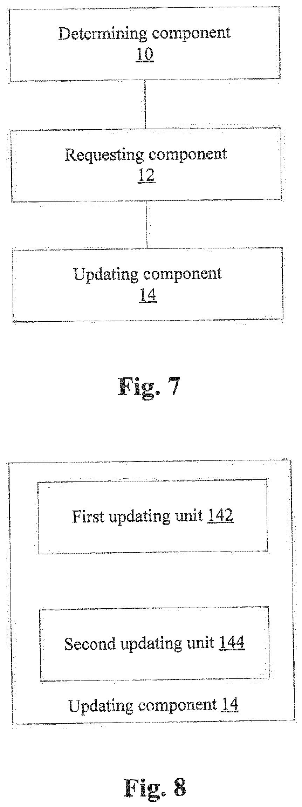

Fig. 7 is the structure diagram 1 of the device for network policy control according to an example embodiment of the present invention. As shown in Fig. 7, the device may further include: an updating component 14, which is coupled with the requesting component 12 and configured to update the service state of the user according to an execution result of the request.

Fig. 8 is a structure diagram of the updating component according to an example embodiment of the present invention. As shown in Fig. 8, the updating component 14 may include: a first updating unit 142, which is configured to, in the case that the request is executed successfully, update the service state of the user to be a high-priority service state; and a second updating unit 144, which is configured to, in the case that the request is executed unsuccessfully, keep the service state before the user requests the high-priority network service policy.

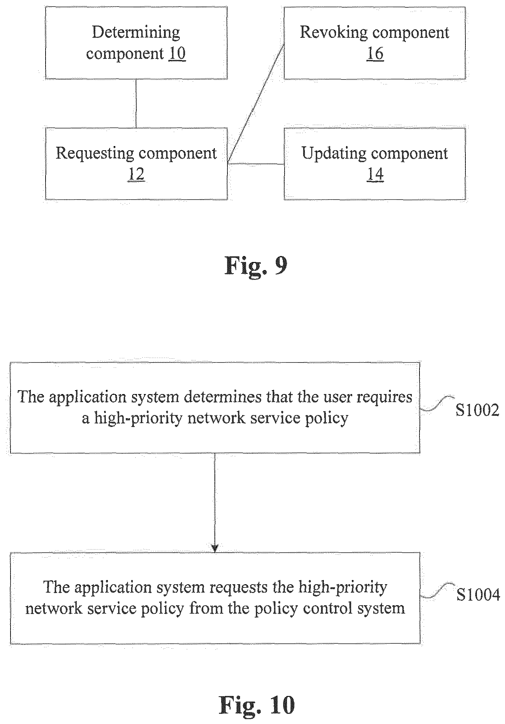

Fig. 9 is the structure diagram 2 of the device for network policy control according to an example embodiment of the present invention. As shown in Fig. 9, the device may further include: a revoking component 16, which is coupled with the requesting component 12 and configured to, in the case that the service selected by the user is completed or an exception of a connection state of the user occurs, send to the policy control system a request for revoking the high-priority network service policy.

According to an embodiment of the present invention, a method for network policy control is also provided, for implementing network policy control in the system and the device provided by the embodiments of the present invention.

Fig. 10 is flowchart of a method for network policy control according to the embodiment of the present invention. As shown in Fig. 10, the method mainly includes S1002 to S1004.

In S1002, an application system determines that a user requires a high-priority network service policy; and

In S1004, the application system requests the high-priority network service policy from a policy control system.

Through the embodiment of the present invention, an application system determines that a user requires a high-priority network service policy, and requests the high-priority network service policy from a policy control system, so that the policy control system can configure the high-priority network service policy for the user on basis of the request of the application system. In this way, a linkage between the application system and a network is implemented, thus the network quality assurance is implemented for the user on the network, and the service experience is improved for the user.

In an example implementation mode of the embodiment of the present invention, when an application system determines that a user requires a high-priority network service policy, the application system may determine the network service policy required by the user and judges whether the current network service policy of the user is lower than the required network service policy; if the current network service policy of the user is lower than the required network service policy, it is determined that the user requires the high-priority network service policy. In an example embodiment, the application system may determine the network service policy required by the user according to a service selected by the user and/or attribute information of the user.

In an example implementation mode of the embodiment of the present invention, an application system may also maintain a service state machine of a user. The service state machine is configured to record a service state of the user. In a practical application, the service state may include: an on-state, an off-state, a common-priority service state, a high-priority service state, and so on. Multiple service state priorities may be set according to the actual need, and network service policies at different levels are provided aiming at different users and/or services.

In the embodiment of the present invention, when a connection is established between a user and an application system, the service state of the user may be recorded as on-state. After a connection is established between the user and the application system, service is provided for the user according to the common priority. When the application system determines that the user requires the high-priority network service policy, the high-priority network service policy is requested; if it is successful, the service state of the user is recorded as the high-priority service state. When the service of the user is completed or an exception of connection occurs, the service state of the user is recorded as the off-state.

In the embodiment of the present invention, after an application system requests the high-priority network service policy from a policy control system, the policy control system may send the high-priority network service policy to the network service control device accessed by a user; the network service control device receives the high-priority network service policy and configures the high-priority network service policy for the user. In an example embodiment, the policy control system may find a corresponding user according to a source IP address and a port number of the user, so as to check an online state and a policy state of the user, and send the high-priority network service policy to the network service control device.

In a practical application, in the case that a network quality limit is set on a network service control device, for example, bandwidth of a user is limited, the network service control device may configure on itself the high-priority network service policy. In the case that a network service policy limit is set on an access network, the network service control device may indicate the access network to set the high-priority network service policy for the user. In an example embodiment, the network service control device may negotiate, through the ANCP, with the access network device to increase access bandwidth of the user.

In an example embodiment, the network service control device may further feed an execution result of network service policy back to a policy control system after execution of the high-priority network service policy. The policy control system may further receive the execution result fed back by the network service control device and feed the received execution result back to the application system. Thus, after requesting the high-priority network service policy, the application system may further update the service state of the user according to the requested execution result. In an example embodiment, in the case that the request is executed successfully, the application system updates the service state of the user to be a high-priority service state; in the case that the request is executed unsuccessfully, the application system keeps the service state before the user requests the high-priority network service policy.

In an example embodiment, if the request is executed unsuccessfully, the application system may, according to a preset policy, request the high-priority network service policy from the policy control system again. For example, after predetermined time, the application system judges the current service state of the user; if the user is in a low-priority service state or a common-priority service state, the application system requests the high-priority network service policy from the policy control system again.

In an example implementation mode of the embodiment of the present invention, in the case that the service selected by the user is completed or an exception of a connection state of the user occurs, the application system sends to the policy control system a request for revoking the high-priority network service policy. In an example embodiment, the application system may further update the state of the user to be an off-state.

In a practical application, the application system may maintain the service state machine of the user. As shown in Fig. 3, the application system sets up a service state machine for the user according to the policy of the application system. When the user selects a service in the application system, the application system sets the user to enter S0 (on-state); the user is in the S0 state, and attempts to establish a service connection; after the connection is established successfully, the application system sets the user to enter S1 (common service state); if the connection is established unsuccessfully, the user attempts corresponding wait and reconnection mechanism; if reconnection is unsuccessful and exceeds corresponding limit, the application system sets the user to enter S3 (off-state), and releases corresponding resource.

After the user enters S1, the application system is triggered to request the high-priority network service policy from the policy control system or the network service control device. After the policy is executed successfully, the application system sets the user to enter S2 (high-priority service state); if the policy is executed unsuccessfully, the application system sets the user to keep in S1; when the user completes download in S1, it is needed to break a download connection; at this point, the user is in S1, the application system sets the user to directly enter S3; when the user is in S1, if the user connection is interrupted abnormally during download, the user directly enters S3 (off-state).

When the user completes download in S2, it is needed to break a download connection, and the application system is triggered to request the policy control system or the network service control device to revoke the high-priority network service policy of the user. After the policy is revoked, the application system sets the user to enter S3 and releases corresponding resource. If the user connection is interrupted abnormally during download, the application system is also triggered to request the policy control system or the network service control device to revoke the high-priority network service policy of the user. After the policy is revoked, the application system sets the user to enter S3 and releases corresponding resource.

In the embodiment of the present invention, the application system may request the high-priority network service policy from the policy control system in the following two modes: 1. the application system directly sends to the policy control system a request for requesting the high-priority network service policy; or, 2. the application system sends, through the network service control device, to the policy control system a request for requesting the high-priority network service policy. The two implementation modes are separately described below.

### Mode 1

In mode 1, an application system directly sends to a policy control system a request for requesting a high-priority network service policy. The mode 1 is elaborated below.

A service state machine is added in the application system for managing a connection state of a user and an upload/download state of a network. On basis of the user state machine, the application system may distinguish a high-level user from a common user to implement differentiated services, and distinguish a paying user from a free user to implement differentiated operations. An interface between the application system and a system for network policy control is added in the application system, so that the application system is equipped with a communication mechanism with the system for network policy control to implement application and network linkage.

When a user selects an application (e.g., high-speed downloading, high-definition video, paying video, user as a member) on a service page of the application system, the application system sets up and keeps a user state, and triggers, according to the state, a request to a policy control system for a high-priority network quality assurance policy aiming at the user. The policy control system then sends to a network device the high-priority network policy aiming at the user. After a download of the service selected by the user is completed, according to a completion state of the user, the application system is triggered to request the policy control system for revoking the high-priority network policy and recovering to the original network policy of the user.

In the embodiment of the present invention, the application system is added with an interface for interaction with the policy control system, so that the application system is equipped with the communication mechanism with the system for network policy control, providing a basis for application and network linkage. In addition, the application system is added with a user state machine for keeping a connection state and a service state of the user, so that the application system may implement specific network assurance policy in a specific time interval aiming at a specific user and specific content, which improving the user experience. At the same time, the fine control and operation are implemented based on the control of user state.

In an example embodiment, the application system may record content service selected by the user, and a source IP address and a port number of the user. The application system interacts, in combination with the state machine of user, with the policy control system in real time through the interface with the policy system, so that the system is equipped with the capability of triggering implementation of network policy based on the service state. The application system maintains a linkage with a user terminal and maintains state information of the user. When download is completed, the user state is triggered to change the user state, and the application system is triggered to send to the policy control system a request for changing the network policy, so as to complete a linkage between application content and the network policy.

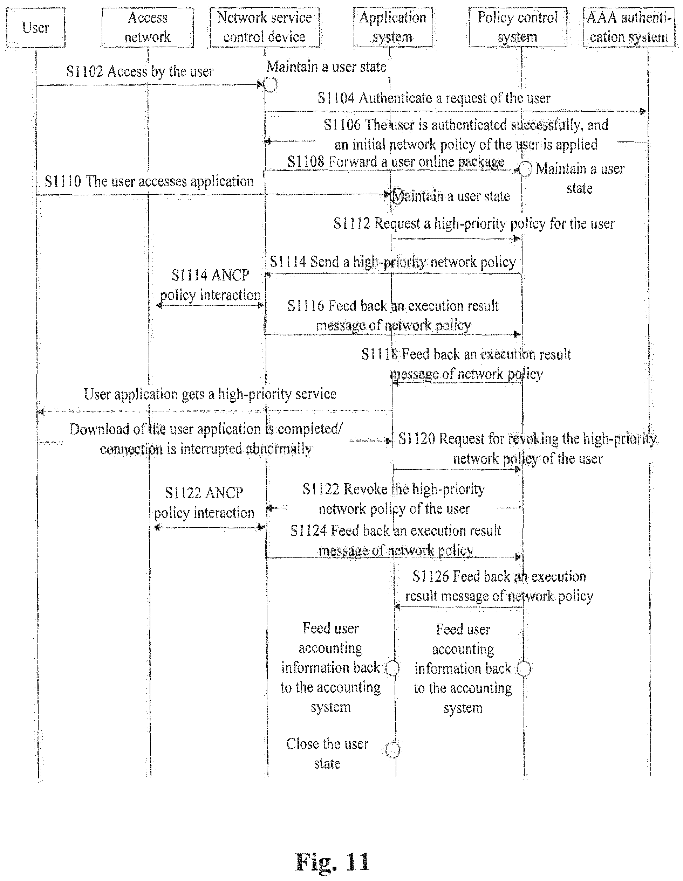

The method of mode 1 is elaborated below in combination with Fig. 11. In Fig. 11, the system involved in mode 1 mainly includes the following parts: a user terminal, an access network, a network service control device (e.g., a Broadband Remote Access Server (BRAS)), an application system (e.g., file download, video application), a policy control system, an Authentication Authorization and Accounting (AAA) authentication system.

Fig. 11 is a flowchart of a method for network policy control according to mode 1 of the embodiment of the present invention. As shown in Fig. 11, the method includes S1102 to S1126.

In S1102, a user terminal accesses a network, and initiates a network access request.

In S1104, a network service control device (BRAS) receives the network access request from the user, sets up and maintains a user state, and initiates a user access request to the AAA authentication system.

In S1106, the AAA authentication system authenticates the user; if the authentication is successful, the AAA authentication system sends to the network service control device a message that the user is authenticated successfully and a corresponding user network policy. After receiving the message that the user is authenticated successfully, the network service control device assigns a corresponding IP address to the user and applies a corresponding network policy to the user.

In S1108, in order to synchronize the user state in the policy control system with the user state on the network service control device, the network service control device sends a user online accounting package to the AAA authentication system, so as to inform the AAA authentication system that the user has begun using the network service, and then the AAA authentication system begins accounting. At the same time, it is also needed to send the same information to the policy control system. After receiving information about user online, the policy control system maintains an online state of the user and the current network policy state of the user (so that the policy control system can send conveniently policy information to the network service control device corresponding to the user, it is suggested to carry an NAS-IP attribute in the information about user online to indicate the network service control device corresponding to the user).

In S1110, the user selects a corresponding service in the application system, e.g., file download or video application, and so on. The application system sets up a corresponding service state machine for the user according to the policy of the application system (e.g., the user is a member, the user is a high-level user, or the user selects a high-level application service).

In S1112, the application system records application information selected by the user and identity information of the user; at the same time, the application system needs to be added with a communication interface (e.g., SOAP, Diameter, COPS) with the policy control system to send a high-priority assurance request of the user to a policy control platform, wherein the message may at least contain a source IP address and a source port number of the user.

In S1114, after receiving the request, the policy control system finds a corresponding user according to the source IP address and the port number of the user, so as to check an online state and a policy state of the user, and sends the high-priority network service policy to the network service control device. Aiming at the access network, there are two cases: one case is that the access network sets a speed limit aiming at a user line, and such case requires the network service control device to increase access bandwidth of the user through the ANCP; the other case is that the access network does not set a speed limit aiming at the user, and in such case it is only needed to deploy a corresponding Quality of Service (QoS) assurance during deploy of the access network.

In S1116, after execution of a network policy, the network service control device feeds execution result information back to the policy control system.

In S1118, after receiving feedback information from the network service control device, the policy control system feeds corresponding policy execution result information back to the application system. After receiving the information fed back by the policy system, the application system decides transition of the state machine of the user. After the network policy is executed successfully, download of user can obtain corresponding network assurance. If the download of user is completed or the user connection is interrupted abnormally, the application system is triggered to send to the policy control system a message of revoking the high-priority network policy of the user.

In S1120, after the download of user is completed or the connection is interrupted abnormally, the application system requests the policy control system to revoke the high-priority network policy of the user.

In S1122, after receiving a message of revoking the high-priority network policy of the user, the policy control system checks an online state and a policy state of the user, and sends the message of revoking the high-priority network policy to the device for policy service control. The policy recovery of the access network is completed by the network service control device and the access network together through the ANCP.

In S1124, after the policy of a network device is executed, execution result information is fed back to the policy control system.

In S1126, the policy control system receives the execution result information fed back by the network device, and feeds the information back to the application system.

In an example embodiment, after the application system receives the feedback information, the application system implements corresponding operations, and processes corresponding user state and accounting information, so that the user enters an off-state to release corresponding system resources. The user uses accounting information of service and other related information; when the user ends use of the application service, and the download is completed or the connection is interrupted, before the user enters an off-state, a related message is sent to an accounting platform by either the application system or the policy control system.

### Mode 2

In mode 2, an application system sends, through a network service control device, to a policy control system a request for requesting a high-priority network service policy. The mode 2 is elaborated below.

A user state machine is added in the application system for managing a connection state of a user and an upload/download state of a network. An interface between the application system and the network service control device is added in the application system.

When a user selects an application (e.g., high-speed downloading, high-definition video, paying video, user as a member) on a service page of the application system, the application system sets up and maintains a user state, and triggers, according to the state, a request to the network service control device for a high-priority network quality assurance policy aiming at the user. The network service control device requests the high-priority network quality assurance policy aiming at the user from the policy control system. The policy control system sends to a network device the high-priority network policy aiming at the user.

After a download of the service selected by the user is completed, according to a completion state of the user, the application system is triggered to request the policy control system for revoking the high-priority network policy of the user and recovering the original network policy of the user. The network service control device requires the policy control system for revoking the high-priority network policy of the user, and feeds the corresponding execution result back to the application system, so that the application system ends the user state machine.

In the embodiment of the present invention, the application system is added with an interface for interaction with the policy control system, so that the application system is equipped with the communication mechanism with the system for network policy control, providing a basis for application and network linkage. In addition, the application system is added with a user state machine for maintaining a connection state and a service state of the user, so that the application system may implement specific network assurance policy in a specific time interval aiming at a specific user and specific content, which improving the user experience. At the same time, the fine control and operation are implemented based on the control of user state.

In an example embodiment, the application system may record content service selected by the user and a source IP address and a port number of the user. A linkage between the application system and the network is implemented in combination with the state machine of user through the interface with the network service control device, so that the system is equipped with the capability of triggering a request and implementation of network policy based on the service state. The application system maintains a linkage with a user terminal and maintains state information of the user. When download is completed, the user state is triggered to change, and the application system is triggered to send to the network service control device a request for changing the network policy, so as to complete a linkage between application content and the network policy. The application system may distinguish a high-level user from a common user based on the user state machine to implement differentiated services; or, the application system may distinguish a paying user from a free user based on the user state machine to implement differentiated operations.

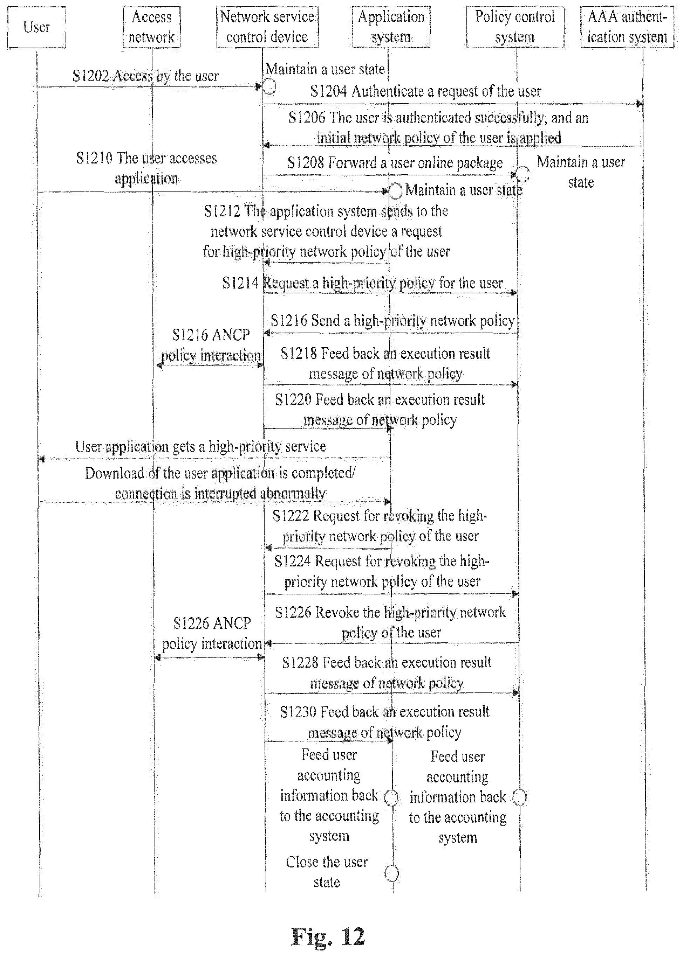

The method of the mode 2 is elaborated below in combination with Fig. 12. In Fig. 12, the system involved in the mode 2 mainly includes the following parts: a user terminal, an access network, a network service control device, an application system (e.g., file download, video application), a policy control system, an AAA authentication system.

Fig. 12 is a flowchart of a method for network policy control according to mode 2 of the embodiment of the present invention. As shown in Fig. 12, the method mainly includes S1202 to S1230.

In S1202, a user terminal accesses a network, and initiates a network access request.

In S1204, a network service control device (BRAS) receives the network access request from the user, sets up and maintains a user state, and initiates a user access request to the AAA authentication system.

In S1206, the AAA authentication system authenticates the user; if the authentication is successful, the AAA authentication system sends to the network service control device a message that the user is authenticated successfully and a corresponding user network policy. After receiving the message that the user is authenticated successfully, the network service control device assigns a corresponding IP address to the user and applies a corresponding network policy to the user.

In S1208, in order the synchronize the user state in the policy control system with the user state on the network service control device, the network service control device sends a user online accounting package to the AAA authentication system, so as to inform the AAA authentication system that the user has begun using the network service, and then the AAA authentication system begins accounting. At the same time, it is also needed to send the same information to the policy control system. After receiving information about user online, the policy control system maintains an online state of the user and the current network policy state of the user.

In S1210, the user selects a service in the application system, e.g., file download or video application, and so on. The application system sets up a corresponding service state machine for the user according to the policy of the application system (e.g., the user is a member, the user is a high-level user, or the user selects a high-level application service).

In S1212, the application system records application information selected by the user and identity information of the user. At the same time, the application system is added with a communication interface with the network service control device to send a request message for high-priority network policy of the user to the network service control device (the application system may need to have device address information of the network service control device corresponding to the user, that is, a correspondence table between a user IP address and a device IP address of a network control device where the user IP address is).

In S1214, after receiving a high-priority request message based on the user from the application system, the network service control device checks an online state and a policy state of the user, and sends a request for high-priority network policy aiming at the user to the policy control system.

In S1216, after receiving the request, the policy control system checks the online state and the policy state of the user, and sends the high-priority network policy to the network service control device. Aiming at the access network, there are two cases: one case is that the access network sets a speed limit aiming at a user line, and in such case, the network service control device may need to increase access bandwidth of the user through the ANCP; the other case is that the access network does not set a speed limit aiming at the user, and in such case, it is only needed to deploy a corresponding Quality of Service (QoS) assurance during deploy of the access network.

In S1218, after execution of a network policy, the network service control device feeds execution result information back to the policy control system.

In S1220, after execution of a network policy, the network service control device feeds an execution result back to the application system; the execution result will trigger transition of the state machine of the user in the application system. After the network policy is executed successfully, download of user can obtain corresponding network assurance. If the download of user is completed or the user connection is interrupted abnormally, the application system is triggered to send to network service control device a message of revoking the high-priority network policy of the user.

In S1222, after the download of user is completed or the connection is interrupted abnormally, the application system requests the policy control system to revoke the high-priority network policy of the user.

In S1224, after receiving a request message of revoking the high-priority network policy of the user from the application system, the network service control device checks an online state and a network policy state of the user, and initiates to the policy control system a requests for revoking the high-priority network policy of the user.

In S1226, after receiving the request for revoking the high-priority network policy of the user from the network service control device, the policy control system checks the online state of the user and the policy information, and sends to the network service control device an instruction of revoking the high-priority network policy of the user. The policy recovery of the access network is completed by the network service control device and the access network together through the ANCP.

In S1228, after the network policy has been executed, the network service control device feeds a message of policy execution result back to the policy control system.

In S1230, after the network policy has been executed, the network service control device feeds the message of policy execution result back to the application system.

In an example embodiment, after the application system received the feedback information, the application system implements corresponding operations, and processes corresponding user state and accounting information, so that the user enters an off-state to release corresponding system resources. The user uses accounting information of service and other related information; when the user ends use of the application service, and the download is completed or the connection is interrupted, before the user enters an off-state, a related message is sent to an accounting platform by either the application system or the policy control system.

It can be seen from the above description that the present invention achieves the following technical effects:
a method for implementing a linkage between the application system and the network is provided; the application system, the policy control system and the network service control device are integrated fully; corresponding attribute, state and port are added in the system, so that the whole system may implement a network service quality assurance based on service trigger in a specific time interval, aiming at a specific user, a specific application and specific content. The network policy triggers implementation of policy according to a start message of the user application, and triggers revoking of policy according to a completion message of the user application. A high requirement of the user for network bandwidth, network quality and other aspects in file download, video watching and other application scenarios is met. Based on the method and system, an effective combination between application content and the network is implemented, which may effectively improve the service experience for the user.

### Industrial applicability

A solution of linkage between the application system and the network, which is provided by the embodiments of the present invention, fully integrates the application system, the policy control system and the network service control device; on the basis, the network quality assurance is implemented for the user on the network, and the service experience is improved for the user; so the embodiments of the present invention have better industrial applicability.

Obviously, those skilled in the field should appreciate that the above-mentioned components and steps of the present invention can be realized by a general-purpose computing device, and they can be centralized in a single computing device or distributed on a network composed of multiple computing devices; optionally, they can be realized by program code which is capable of being executed by the computing device, so that they can be stored in a storage device to be executed by the computing device; in addition, under some conditions, the presented or described steps can be executed in an order different from that described here; or they are made into integrated circuit components, respectively; or multiple components and steps of them are made into a single integrated circuit component to realize. In this way, the present invention is not limited to any particular combination of hardware and software.

The above is only the example embodiment of the present invention and not intended to limit the present invention; for those skilled in the field, the present invention may have various modifications and changes. Any modifications, equivalent replacements, improvements and the like within the principle of the present invention shall fall within the scope of the claims of the present invention.

## Claims

1. A method for network policy control, **characterized by** comprising:
determining, by an application system, that a user requires a high-priority network service policy (S1002); and
requesting, by the application system, the high-priority network service policy from a policy control system (S1004);
wherein determining, by the application system, that the user requires the high-priority network service policy (S1002) comprises:
determining, by the application system, a network service policy required by the user;
judging, by the application system, whether a current network service policy of the user is lower than the required network service policy;
if the current network service policy of the user is lower than the required network service policy, determining, by the application system, that the user requires the high-priority network service policy.

2. The method according to claim 1, **characterized in that** determining, by the application system, the network service policy required by the user comprises:
determining, by the application system, the network service policy required by the user according to a service selected by the user and/or attribute information of the user.

3. The method according to any one of claims 1 to 2, **characterized in that** requesting, by the application system, the high-priority network service policy from the policy control system (S1004) comprises:
directly sending, by the application system, to the policy control system a request for requesting the high-priority network service policy; or
sending, by the application system, to the policy control system a request for requesting the high-priority network service policy through a network service control device.

4. The method according to any one of claims 1 to 2, **characterized by** further comprising:
maintaining, by the application system, a service state machine of the user, wherein the service state machine is configured to record a service state of the user.

5. The method according to claim 4, **characterized in that** after requesting, by the application system, the high-priority network service policy from the policy control system, the method further comprises:
updating, by the application system, the service state of the user according to an execution result of the request.

6. The method according to claim 5, **characterized in that** updating, by the application system, the service state of the user according to the execution result of the request comprises:
in the case that the request is executed successfully, updating, by the application system, the service state of the user to be a high-priority service state;
in the case that the request is executed unsuccessfully, keeping, by the application system, the service state before the user requests the high-priority network service policy.

7. The method according to any one of claims 1 to 2, **characterized by** further comprising:
in the case that the service selected by the user is completed or an exception of a connection state of the user occurs, sending, by the application system, to the policy control system a request for revoking the high-priority network service policy.

8. A device for network policy control located in an application system, **characterized in that** the device comprises:
a determining component (10), which is configured to determine that a user requires a high-priority network service policy; and
a requesting component (12), which is configured to request the high-priority network service policy from a policy control system;
wherein the determining component (10) comprises:
a first determining unit (102), which is configured to determine a network service policy required by the user;
a judging unit (104), which is configured to judge whether a current network service policy of the user is lower than the required network service policy; and
a second determining unit (106), which is configured to, in the case that a judgement result of the judging unit is that the current network service policy of the user is lower than the required network service policy, determine that the user requires the high-priority network service policy.

9. The device according to claim 8, **characterized in that** the requesting component (12) comprises:
a first sending unit (122), which is configured to directly send to the policy control system a request for requesting the high-priority network service policy; or
a second sending unit (124), which is configured to send to the policy control system a request for requesting the high-priority network service policy through a network service control device.

10. The device according to claim 8, **characterized by** further comprising:
a maintaining component, which is configured to maintain a service state machine of the user, wherein the service state machine is configured to record a service state of the user.

11. The device according to claim 10, **characterized by** further comprising:
an updating component (14), which is configured to update the service state of the user according to an execution result of the request;

12. The device according to claim 11, **characterized in that** the updating component (14) comprises:
a first updating unit (142), which is configured to, in the case that the request is executed successfully, update the service state of the user to be a high-priority service state; and
a second updating unit (144), which is configured to, in the case that the request is executed unsuccessfully, keep the service state before the user requests the high-priority network service policy.

13. The device according to claim 8, **characterized by** further comprising:
a revoking component (16), which is configured to, in the case that the service selected by the user is completed or an exception of a connection state of the user occurs, send to the policy control system a request for revoking the high-priority network service policy.

14. An application system, **characterized by** comprising: a device for network policy control according to any one of claims 8 to 13.

15. A system for network policy control, **characterized by** comprising: an application system (1) and a policy control system (2), wherein
the application system (1) is configured to determine that a user requires a high-priority network service policy, and request the high-priority network service policy from the policy control system; and
the policy control system (2) is configured to configure the high-priority network service policy for the user in responsive to the request of the application system for the high-priority network service policy;
wherein the application system (1) is further configured to determine a network service policy required by the user; to judge whether a current network service policy of the user is lower than the required network service policy; and if the current network service policy of the user is lower than the required network service policy, to determine, by the application system, that the user requires the high-priority network service policy.

16. The system according to claim 15, **characterized by** further comprising:
a network service control device (3), which is configured to receive from the application system a request for requesting the high-priority network service policy, and request the high-priority network service policy from the policy control system.

17. The system according to claim 16, **characterized in that**
the policy control system (2) is configured to send the high-priority network service policy to a network service control device accessed by the user; and
the network service control device (3) is further configured to receive the high-priority network service policy, and configure the high-priority network service policy for the user.

## Patentansprüche

1. Ein Verfahren zur Netzrichtliniensteuerung, das **dadurch gekennzeichnet ist, dass** es folgende Schritte aufweist:
Bestimmen, durch ein Anwendungssystem, dass ein Benutzer eine Netzdienstrichtlinie mit hoher Priorität benötigt (S1002); und
Anfordern, durch das Anwendungssystem, der Netzdienstrichtlinie mit hoher Priorität von einem Richtliniensteuersystem (S1004);
wobei das Bestimmen, durch das Anwendungssystem, dass der Benutzer die Netzdienstrichtlinie mit hoher Priorität benötigt (S1002), folgende Schritte aufweist:
Bestimmen, durch das Anwendungssystem, einer Netzdienstrichtlinie, die durch den Benutzer benötigt wird;
Beurteilen, durch das Anwendungssystem, ob eine momentane Netzdienstrichtlinie des Benutzers niedriger ist als die benötigte Netzdienstrichtlinie;
wenn die momentane Netzdienstrichtlinie des Benutzers niedriger ist als die benötigte Netzdienstrichtlinie, Bestimmen, durch das Anwendungssystem, dass der Benutzer die Netzdienstrichtlinie mit hoher Priorität benötigt.

2. Das Verfahren gemäß Anspruch 1, das **dadurch gekennzeichnet ist, dass** das Bestimmen, durch das Anwendungssystem, der Netzdienstrichtlinie, die durch den Benutzer benötigt wird, folgenden Schritt aufweist:
Bestimmen, durch das Anwendungssystem, der Netzdienstrichtlinie, die durch den Benutzer benötigt wird, gemäß einem Dienst, der durch den Benutzer ausgewählt wird, und/oder Attributinformationen des Benutzers.

3. Das Verfahren gemäß einem der Ansprüche 1 bis 2, das **dadurch gekennzeichnet ist, dass** das Anfordern, durch das Anwendungssystem, der Netzdienstrichtlinie mit hoher Priorität von dem Richtliniensteuersystem (S1004) folgende Schritte aufweist:
direktes Senden, durch das Anwendungssystem, einer Anforderung zum Anfordern der Netzdienstrichtlinie mit hoher Priorität an das Richtliniensteuersystem; oder
Senden, durch das Anwendungssystem, einer Anforderung zum Anfordern der Netzdienstrichtlinie mit hoher Priorität durch eine Netzdienststeuervorrichtung an das Richtliniensteuersystem.

4. Das Verfahren gemäß einem der Ansprüche 1 bis 2, das ferner **dadurch gekennzeichnet ist, dass** es folgenden Schritt aufweist:
Aufrechterhalten einer Dienstzustandsmaschine des Benutzers durch das Anwendungssystem, wobei die Dienstzustandsmaschine ausgebildet ist, um einen Dienstzustand des Benutzers aufzuzeichnen.

5. Das Verfahren gemäß Anspruch 4, das **dadurch gekennzeichnet ist, dass** nach dem Anfordern, durch das Anwendungssystem, der Netzdienstrichtlinie mit hoher Priorität von dem Richtliniensteuersystem das Verfahren ferner folgenden Schritt aufweist:
Aktualisieren, durch das Anwendungssystem, des Dienstzustands des Benutzers gemäß einem Ausführungsergebnis der Anforderung.

6. Das Verfahren gemäß Anspruch 5, das **dadurch gekennzeichnet ist, dass** das Aktualisieren, durch das Anwendungssystem, des Dienstzustands des Benutzers gemäß dem Ausführungsergebnis der Anforderung folgende Schritte aufweist:
in dem Fall, dass die Anforderung erfolgreich ausgeführt wird, Aktualisieren, durch das Anwendungssystem, des Dienstzustands des Benutzers, um in einem Dienstzustand mit hoher Priorität zu sein;
in dem Fall, dass die Anforderung nicht erfolgreich ausgeführt wird, Beibehalten,
durch das Anwendungssystem, des Dienstzustands, bevor der Benutzer die Netzdienstrichtlinie mit hoher Priorität anfordert.

7. Das Verfahren gemäß einem der Ansprüche 1 bis 2, das **dadurch gekennzeichnet ist, dass** es ferner folgenden Schritt aufweist:
in dem Fall, dass der Dienst, der durch den Benutzer ausgewählt wird, abgeschlossen ist, oder eine Ausnahme eines Verbindungszustands des Benutzers auftritt, Senden, durch das Anwendungssystem, einer Anforderung zum Aufheben der Netzdienstrichtlinie mit hoher Priorität an das Richtliniensteuersystem.

8. Eine Vorrichtung zur Netzrichtliniensteuerung, die sich in einem Anwendungssystem befindet, **dadurch gekennzeichnet, dass** die Vorrichtung folgende Merkmale aufweist:
eine Bestimmungskomponente (10), die ausgebildet ist, um zu bestimmen, dass ein Benutzer eine Netzdienstrichtlinie mit hoher Priorität benötigt; und
eine Anforderungskomponente (12), die ausgebildet ist, um die Netzdienstrichtlinie mit hoher Priorität von einem Richtliniensteuersystem anzufordern;
wobei die Bestimmungskomponente (10) folgende Merkmale aufweist:
eine erste Bestimmungseinheit (102), die ausgebildet ist, um eine Netzdienstrichtlinie, die durch den Benutzer benötigt wird, zu bestimmen;
eine Beurteilungseinheit (104), die ausgebildet ist, um zu beurteilen, ob eine momentane Netzdienstrichtlinie des Benutzers niedriger ist als die benötigte Netzdienstrichtlinie; und
eine zweite Bestimmungseinheit (106), die ausgebildet ist, um in dem Fall, dass ein Beurteilungsergebnis der Beurteilungseinheit so ist, dass die momentane Netzdienstrichtlinie des Benutzers niedriger ist als die benötigte Netzdienstrichtlinie, zu bestimmen, dass der Benutzer die Netzdienstrichtlinie mit hoher Priorität benötigt.

9. Die Vorrichtung gemäß Anspruch 8, die **dadurch gekennzeichnet ist, dass** die anfordernde Komponente (12) folgende Merkmale aufweist:
eine erste Sendeeinheit (122), die ausgebildet ist, um eine Anforderung zum Anfordern der Netzdienstrichtlinie mit hoher Priorität direkt an das Richtliniensteuersystem zu senden; oder
eine zweite Sendeeinheit (124), die ausgebildet ist, um eine Anforderung zum Anfordern der Netzdienstrichtlinie mit hoher Priorität durch eine Netzdienststeuervorrichtung an das Richtliniensteuersystem zu senden.

10. Die Vorrichtung gemäß Anspruch 8, die ferner **dadurch gekennzeichnet ist, dass** sie folgendes Merkmal aufweist:
eine Aufrechterhaltungskomponente, die ausgebildet ist, um eine Dienstzustandsmaschine des Benutzers aufrechtzuerhalten, wobei die Dienstzustandsmaschine ausgebildet ist, um einen Dienstzustand des Benutzers aufzuzeichnen.

11. Die Vorrichtung gemäß Anspruch 10, die **dadurch gekennzeichnet ist, dass** sie ferner folgendes Merkmal aufweist:
eine Aktualisierungskomponente (14), die ausgebildet ist, um den Dienstzustand des Benutzers gemäß einem Ausführungsergebnis der Anforderung zu aktualisieren.

12. Die Vorrichtung gemäß Anspruch 11, die **dadurch gekennzeichnet ist, dass** die Aktualisierungskomponente (14) folgende Merkmale aufweist:
eine erste Aktualisierungseinheit (142), die ausgebildet ist, um in dem Fall, dass die Anforderung erfolgreich ausgeführt wird, den Dienstzustand des Benutzers auf einen Dienstzustand mit hoher Priorität zu aktualisieren; und
eine zweite Aktualisierungseinheit (144), die ausgebildet ist, um in dem Fall, dass die Anforderung nicht erfolgreich ausgeführt wird, den Dienstzustand, bevor der Benutzer die Netzdienstrichtlinie mit hoher Priorität anfordert, beizubehalten.

13. Die Vorrichtung gemäß Anspruch 8, die **dadurch gekennzeichnet ist, dass** sie ferner folgendes Merkmal aufweist:
eine Aufhebungskomponente (16), die ausgebildet ist, um in dem Fall, dass der Dienst, der durch den Benutzer ausgewählt wird, abgeschlossen ist, oder eine Ausnahme eines Verbindungszustands des Benutzers auftritt, eine Anforderung zum Aufheben der Netzdienstrichtlinie mit hoher Priorität an das Richtliniensteuersystem zu senden.

14. Ein Anwendungssystem, das **dadurch gekennzeichnet ist, dass** es folgendes Merkmal aufweist: eine Vorrichtung zur Netzrichtliniensteuerung gemäß einem der Ansprüche 8 bis 13.

15. Ein System zur Netzrichtliniensteuerung, das **dadurch gekennzeichnet ist, dass** es folgende Merkmale aufweist: ein Anwendungssystem (1) und ein Richtliniensteuersystem (2), wobei:
das Anwendungssystem (1) ausgebildet ist, um zu bestimmen, dass ein Benutzer eine Netzdienstrichtlinie mit hoher Priorität benötigt, und um die Netzdienstrichtlinie mit hoher Priorität von dem Richtliniensteuersystem anzufordern; und
das Richtliniensteuersystem (2) ausgebildet ist, um die Netzdienstrichtlinie mit hoher Priorität für den Benutzer ansprechend auf die Anforderung des Anwendungssystems nach der Netzdienstrichtlinie mit hoher Priorität zu konfigurieren;
wobei das Anwendungssystem (1) ferner ausgebildet ist, um eine Netzdienstrichtlinie, die durch den Benutzer benötigt wird, zu bestimmen; zu beurteilen, ob eine momentane Netzdienstrichtlinie des Benutzers niedriger ist als die benötigte Netzdienstrichtlinie; und wenn die momentane Netzdienstrichtlinie des Benutzers niedriger ist als die benötigte Netzdienstrichtlinie, durch das Anwendungssystem zu bestimmen, dass der Benutzer die Netzdienstrichtlinie mit hoher Priorität benötigt.

16. Das System gemäß Anspruch 15, das **dadurch gekennzeichnet ist, dass** es ferner folgendes Merkmal aufweist:
eine Netzdienststeuervorrichtung (3), die ausgebildet ist, um von dem Anwendungssystem eine Anforderung zum Anfordern der Netzdienstrichtlinie mit hoher Priorität zu empfangen und die Netzdienstrichtlinie mit hoher Priorität von dem Richtliniensteuersystem anzufordern.

17. Das System gemäß Anspruch 16, das **dadurch gekennzeichnet ist, dass**:
das Richtliniensteuersystem (2) ausgebildet ist, um die Netzdienstrichtlinie mit hoher Priorität an eine Netzdienststeuervorrichtung zu senden, auf die durch den Benutzer zugegriffen wird; und
die Netzdienststeuervorrichtung (3) ferner ausgebildet ist, um die Netzdienstrichtlinie mit hoher Priorität zu empfangen und die Netzdienstrichtlinie mit hoher Priorität für den Benutzer zu konfigurieren.

## Revendications

1. Procédé de commande de politique de réseau, **caractérisé par le fait qu'**il comprend le fait de:
déterminer, par un système de demandes, si un utilisateur requiert une politique de service de réseau de haute priorité (S1002); et
demander, par le système de demandes, la politique de service de réseau de haute priorité d'un système de commande de politique (S1004);
dans lequel la détermination, par le système de demandes, de si l'utilisateur requiert la politique de service de réseau de haute priorité (S1002) comprend le fait de:
déterminer, par le système de demandes, une politique de service de réseau requise par l'utilisateur;
juger, par le système de demandes, si une politique de service de réseau actuelle de l'utilisateur est inférieure à la politique de service de réseau requise;
si la politique de service de réseau actuelle de l'utilisateur est inférieure à la politique de service de réseau requise, déterminer, par le système de demandes, si l'utilisateur requiert la politique de service de réseau de haute priorité.

2. Procédé selon la revendication 1, **caractérisé par le fait que** la détermination, par le système de demandes, de la politique de service de réseau requise par l'utilisateur comprend le fait de:
déterminer, par le système de demandes, la politique de service réseau requise par l'utilisateur selon un service sélectionné par l'utilisateur et/ou les informations d'attribut de l'utilisateur.

3. Procédé selon l'une quelconque des revendications 1 à 2, **caractérisé par le fait que** la demande, par le système de demandes, de la politique de service de réseau de haute priorité du système de commande de politique (S1004) comprend le fait de:
envoyer directement, par le système de demandes, au système de commande de politique, une demande pour demander la politique de service de réseau de haute priorité; ou
envoyer, par le système de demandes, au système de commande de politique une demande pour demander la politique de service de réseau prioritaire via un dispositif de commande de service de réseau.

4. Procédé selon l'une quelconque des revendications 1 à 2, **caractérisé par le fait qu'**il comprend par ailleurs le fait de:
maintenir, par le système de demandes, une machine d'état de service de l'utilisateur, où la machine d'état de service est configurée pour enregistrer un état de service de l'utilisateur.

5. Procédé selon la revendication 4, **caractérisé par le fait qu'**après la demande, par le système de demandes, de la politique de service de réseau de haute priorité du système de commande de politique, le procédé comprend par ailleurs le fait de:
mettre à jour, par le système de demandes, l'état de service de l'utilisateur selon un résultat d'exécution de la demande.

6. Procédé selon la revendication 5, **caractérisé par le fait que** la mise à jour, par le système de demandes, de l'état de service de l'utilisateur selon le résultat d'exécution de la demande comprend le fait de:
au cas où la demande est exécutée avec succès, mettre à jour, par le système de demandes, l'état de service de l'utilisateur de sorte qu'il soit un état de service prioritaire;
au cas où la demande est exécutée sans succès, maintenir, par le système de demandes, l'état du service avant que l'utilisateur ne demande la politique de service de réseau de haute priorité.

7. Procédé selon l'une quelconque des revendications 1 à 2, **caractérisé par** le qu'il comprend par ailleurs le fait de:
au cas où le service sélectionné par l'utilisateur est terminé ou en cas d'une exception d'un état de connexion de l'utilisateur, envoyer, par le système de demandes, au système de commande de politique, une demande de révoquer la politique de service de réseau de haute priorité.

8. Dispositif de commande de politique de réseau situé dans un système de demandes, **caractérisé par le fait que** le dispositif comprend:
un composant de détermination, (10) qui est configuré pour déterminer si un utilisateur requiert une politique de service de réseau de haute priorité; et
un composant de demande (12) qui est configuré pour demander la politique de service de réseau de haute priorité d'un système de commande de politique;
dans lequel le composant de détermination (10) comprend:
une première unité de détermination (102) qui est configurée pour déterminer une politique de service de réseau requise par l'utilisateur;
une unité de jugement (104) qui est configurée pour juger si une politique de service de réseau actuelle de l'utilisateur est inférieure à la politique de service de réseau requise; et
une deuxième unité de détermination (106) qui est configurée, au cas où un résultat de jugement de l'unité de jugement est que la politique de service de réseau actuelle de l'utilisateur est inférieure à la politique de service de réseau requise, pour déterminer si l'utilisateur requiert la politique de service de réseau de haute priorité.

9. Dispositif selon la revendication 8, **caractérisé par le fait que** le composant de demande (12) comprend:
une première unité d'envoi (122) qui est configurée pour envoyer directement au système de commande de politique une demande pour demander la politique de service de réseau de haute priorité; ou
une deuxième unité d'envoi (124) qui est configurée pour envoyer au système de commande de politique une demande pour demander la politique de service réseau de haute priorité via un dispositif de commande de service de réseau.

10. Dispositif selon la revendication 8, **caractérisé par le fait qu'**il comprend par ailleurs:
une composant de maintien qui est configuré pour maintenir, une machine d'état de service de l'utilisateur, où la machine d'état de service est configurée pour enregistrer un état de service de l'utilisateur.

11. Dispositif selon la revendication 10, **caractérisé par le fait qu'**il comprend par ailleurs:
un composant de mise à jour (14) qui est configuré pour mettre à jour l'état de service de l'utilisateur selon un résultat d'exécution de la demande.

12. Dispositif selon la revendication 11, **caractérisé par le fait que** le composant de mise à jour (14) comprend:
une première unité de mise à jour (142) qui est configurée pour mettre à jour, au cas où la demande est exécutée avec succès, l'état de service de l'utilisateur de manière à être un état de service de haute priorité; et
une deuxième unité de mise à jour (144) qui est configurée pour maintenir, au cas où la demande est exécutée sans succès, l'état de service avant que l'utilisateur ne demande la politique de service de réseau de haute priorité.

13. Dispositif selon la revendication 8, **caractérisé par le fait qu'**il comprend par ailleurs:
un composant d'annulation (16) qui est configuré pour envoyer, au cas où le service sélectionné par l'utilisateur est terminé ou qu'il se produit une exception d'un état de connexion de l'utilisateur, au système de commande de politique une demande de révoquer la politique de service de réseau de haute priorité.

14. Système de demandes, **caractérisé par le fait qu'**il comprend: un dispositif de commande de politique de réseau selon l'une quelconque des revendications 8 à 13.

15. Système de commande de politique de réseau, **caractérisé par le fait qu'**il comprend: un système de demandes (1) et un système de commande de politique (2), dans lequel
le système de demandes (1) est configuré pour déterminer si un utilisateur requiert une politique de service de réseau de haute priorité et demander la politique de service de réseau de haute priorité du système de commande de politique; et
le système de commande de politique (2) est configuré pour configurer la politique de service réseau de haute priorité pour l'utilisateur en réponse à la demande du système de demandes de la politique de service de réseau de haute priorité;
dans lequel le système de demandes (1) est par ailleurs configuré pour déterminer une politique de service de réseau requise par l'utilisateur; pour juger si une politique de service de réseau actuelle de l'utilisateur est inférieure à la politique de service de réseau requise; et, si la politique de service de réseau actuelle de l'utilisateur est inférieure à la politique de service de réseau requise, pour déterminer, par le système de demandes, si l'utilisateur requiert la politique de service réseau de haute priorité.

16. Système selon la revendication 15, **caractérisé par le fait qu'**il comprend par ailleurs:
un dispositif de commande de service de réseau (3) qui est configuré pour recevoir du système de demandes une demande pour demander une politique de service de réseau de haute priorité, et demander la politique de service de réseau de haute priorité du système de commande de politique.

17. Système selon la revendication 16, **caractérisé par le fait que**
le système de commande de politique (2) est configuré pour envoyer la politique de service de réseau de haute priorité à un dispositif de commande de service de réseau accédé par l'utilisateur; et
le dispositif de commande de service de réseau (3) est par ailleurs configuré pour recevoir la politique de service de réseau de haute priorité, et configurer la politique de service de réseau de haute priorité pour l'utilisateur.
